# EUROPEAN PATENT APPLICATION

(11) **EP 1 058 204 A1**
(43) Date of publication of application: **06.12.2000**
(21) Application number: 99110925.7
(22) Date of filing: 04.06.1999
(51) Int. Cl.: G06K 9/22, G06K 9/24, G06K 11/18, G06F 3/033, G06F 3/023

(54) **Writing instrument adapted for use as a user input device of a computer**

(71) Applicant: Shen, Ming-Tung, Taipei City (TW)
(72) Inventor: Shen, Ming-Tung, Taipei City (TW)
(74) Representative: Altenburg, Udo, Dipl.-Phys.

(57) **Abstract**

A writing instrument (1) is adapted for use as a user input device of a computer (4), and includes an elongated pen barrel (10) having a writing end provided with a rotatable ball bearing (15) that serves as a ballpoint writing tip (16). The pen barrel (10) is adapted to be held on one hand for moving the ball bearing (15) on a writing surface. First and second encoding assemblies (2, 2') are mounted on the writing end of the pen barrel (10) , encode movement of the ball bearing (15) along X and Y directions, and generate X-axis and Y-axis drive signals corresponding to encoded movement of the ball bearing (15) along the X and Y directions. A communications device (3, 30) is provided on the pen barrel (10) and is connected electrically to the first and second encoding assemblies (2, 2') to receive the X-axis and Y-axis drive signals therefrom. The communications device (3, 30) is adapted to establish a communications link with the computer (4).

## Description

The invention relates to a writing instrument, more particularly to a writing instrument that is adapted for use as a user input device of a computer.

A computer mouse and a computer keyboard are two common examples of a user input device for a computer. The computer mouse is used to control movement of a cursor on a screen of the computer, whereas the computer keyboard is used to provide input characters to the computer. It is noted that the conventional computer mouse is not designed to provide input characters to the computer, thereby limiting the functionality thereof. On the other hand, while the computer keyboard has the function of inputting characters to the computer, the computer keyboard is inconvenient to use when controlling movement of the screen cursor. In addition, due to the limited number of keys thereon, the computer keyboard is also inconvenient to use when inputting characters of a complex language, such as Chinese.

Therefore, the main object of the present invention is to provide a writing instrument that is adapted for use as a user input device of a computer. The writing instrument can be used to control movement of a cursor on a screen of the computer, and can also be used to provide input characters to the computer.

According to the present invention, a writing instrument is adapted for use as a user input device of a computer, and comprises an elongated pen barrel, first and second encoding assemblies, and a communications device. The pen barrel has a writing end provided with a rotatable ball bearing that serves as a ballpoint writing tip. The pen barrel is adapted to be held on one hand for moving the ball bearing on a writing surface. The first encoding assembly, which is mounted on the writing end of the pen barrel, encodes movement of the ball bearing along an X-direction, and generates X-axis drive signals corresponding to encoded movement of the ball bearing along the X-direction. The second encoding assembly, which is mounted on the writing end of the pen barrel, encodes movement of the ball bearing along a Y-direction, and generates Y-axis drive signals corresponding to encoded movement of the ball bearing along the Y-direction. The communications device is provided on the pen barrel, and is connected electrically to the first and second encoding assemblies to receive the X-axis and Y-axis drive signals therefrom. The communications device is adapted to establish a communications link with the computer.

Preferably, the communications device includes a processor connected electrically to the first and second encoding assemblies, and a communications unit connected to the processor. The processor is configured so as to be operable in a cursor control mode, where the processor controls the communications unit to transmit the X-axis and Y-axis drive signals for reception by the computer. The X-axis and Y-axis drive signals can then be used to control movement of a cursor on a screen of the computer.

Since the ball bearing is movable to form characters on the writing surface, the processor is further configured so as to be operable in a keyboard mode, where the processor identifies the characters formed on the writing surface via the ball bearing from the X-axis and Y-axis drive signals, generates computer codes that are assigned to the characters identified thereby, and controls the communications unit to transmit the computer codes for reception by the computer.

Other features and advantages of the present invention will become apparent in the following detailed description of the preferred embodiments with reference to the accompanying drawings, of which:
Figure 1 is a fragmentary schematic view illustrating a writing tip of the first preferred embodiment of a writing instrument according to the present invention;
Figure 2 is a schematic view illustrating an encoding assembly of the first preferred embodiment;
Figure 3 is a schematic view illustrating the position relationship among encoding assemblies and a ball bearing of the first preferred embodiment;
Figure 4 is a schematic view illustrating a rotary member and a sensing unit of the encoding assembly of the first preferred embodiment;
Figure 5 illustrates the relationship among drive signals from the encoding assemblies and direction of movement of the ball bearing according to the first preferred embodiment;
Figure 6 is a timing diagram illustrating the drive signals from the encoding assemblies of the first preferred embodiment when movement of the ball bearing occurs only in a +Y-direction;
Figure 7 is a timing diagram illustrating the drive signals from the encoding assemblies of the first preferred embodiment when movement of the ball bearing occurs in both a -Y-direction and a +X-direction;
Figure 8 is a timing diagram illustrating the drive signals from the encoding assemblies of the first preferred embodiment when movement of the ball bearing occurs only in a +X-direction;
Figure 9 is a fragmentary schematic sectional view of a pen barrel of the first preferred embodiment;
Figure 10 is a schematic circuit block diagram of a communications device of the first preferred embodiment;
Figure 11 is a schematic circuit block diagram of a communications device of the second preferred embodiment of a writing instrument according to the present invention;
Figure 12 illustrates how a processor and a memory device are configured in the communications device of Figure 11;
Figure 13 is a schematic view illustrating a rotary member and a sensing unit of an encoding assembly of the third preferred embodiment of a writing instrument according to the present invention; and
Figure 14 is a schematic view illustrating a rotary member and a sensing unit of an encoding assembly of the fourth preferred embodiment of a writing assembly according to the present invention.

Before the present invention is described in greater detail, it should be noted that like elements are denoted by the same reference numerals throughout the disclosure.

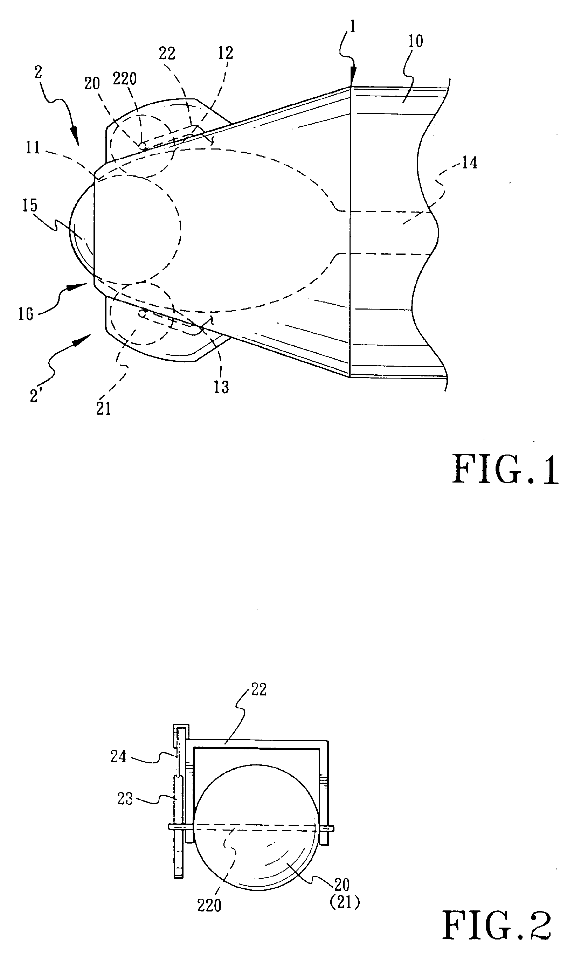

Referring to Figure 1, the first preferred embodiment of a writing instrument 1 according to the present invention is shown to comprise an elongated pen barrel 10 having a writing end formed with an axial opening 11 and a pair of orthogonal radial chambers that are communicated with the opening 11 via cut-outs 12, 13. A rotatable ball bearing 15 extends outwardly of the pen barrel 10 at the axial opening 11 to serve as a ballpoint writing tip 16. An ink supplying unit 14, in the form of an ink core, is disposed in the pen barrel 10 and supplies ink to the ball bearing 15. In the preferred embodiment, the ball bearing 15 is retained rotatably on one end of the ink supplying unit 14. First and second encoding assemblies 2, 2' are mounted respectively in the radial chambers at the writing end of the pen barrel 10. The first encoding assembly 2 encodes movement of the ball bearing 15 along an X-direction, and generates X-axis drive signals corresponding to encoded movement of the ball bearing 15 along the X-direction. The second encoding assembly 2' encodes movement of the ball bearing 15 along a Y-direction, and generates Y-axis drive signals corresponding to encoded movement of the ball bearing 15 along the Y-direction.

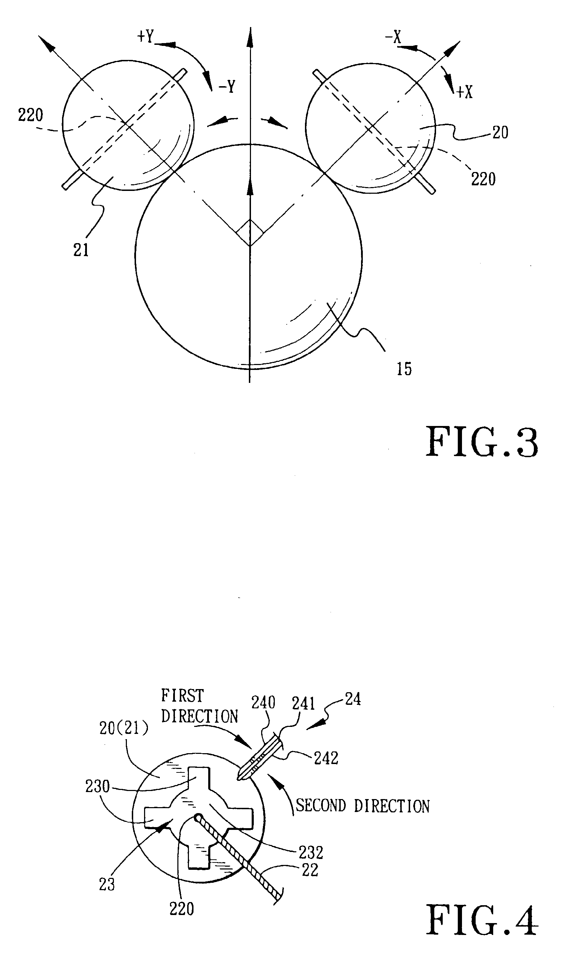

Referring to Figures 1 through 4, each of the first and second encoding assemblies 2, 2' includes a frame member 22 mounted securely in the respective radial chamber at the writing end of the pen barrel 10. A rotary shaft 220 is mounted rotatably on the frame member 22. A contact member 20, 21, in the form of a ball, is mounted securely on the rotary shaft 220 and extends into the pen barrel 10 via the cut-outs 12, 13 for contacting the ball bearing 15 such that rotation of the ball bearing 15 in a certain direction can drive rotation of the rotary shaft 220. The contact members 20, 21 contact the ball bearing 15 at orthogonal locations, as best shown in Figure 3. A rotary member 23 is mounted securely on the rotary shaft 220 for co-rotation therewith. A sensing unit 24 is mounted securely on the frame member 22 for generating the drive signals in response to detected movement of the rotary member 23.

As such, when the pen barrel 10 is held on one hand for forming characters on a writing surface via the ball bearing 15, the contact members 20, 21 rotate according to the direction of movement of the ball bearing 15 to drive rotation of the respective rotary shaft 220 and the associated rotary member 23. The X-axis and Y-axis drive signals are subsequently and respectively generated by the sensing units 24 of the first and second encoding assemblies 2, 2' in response to detected movement of the corresponding rotary member 23.

In the first preferred embodiment, the rotary member 23 is formed as a conductive member having a central mounting portion 232 mounted securely on the rotary shaft 220, and a plurality of equally spaced contact arms 230 that extend radially and outwardly from the central mounting portion 232. The rotary member 23 is connected electrically to a first voltage source, such as the ground terminal of a power supply unit. The sensing unit 24 includes an insulator substrate 241 mounted on the frame member 22 proximate to the rotary member 23, and front and rear conductor plates 240, 242 mounted respectively on front and rear sides of the insulator substrate 241. The front and rear conductor plates 240, 242 are connected electrically to a second voltage source, such as the positive (or Vcc) terminal of a power supply unit. When the contact members 20, 21 rotate in a corresponding first direction due to movement of the ball bearing 15, the contact arms 230 contact successively the front conductor plate 240 to result in +X-axis and +Y-axis drive signals. Accordingly, when the contact members 20, 21 rotate in a corresponding opposite second direction due to movement of the ball bearing 15, the contact arms 230 contact successively the rear conductor plate 242 to result in -X-axis and -Y-axis drive signals.

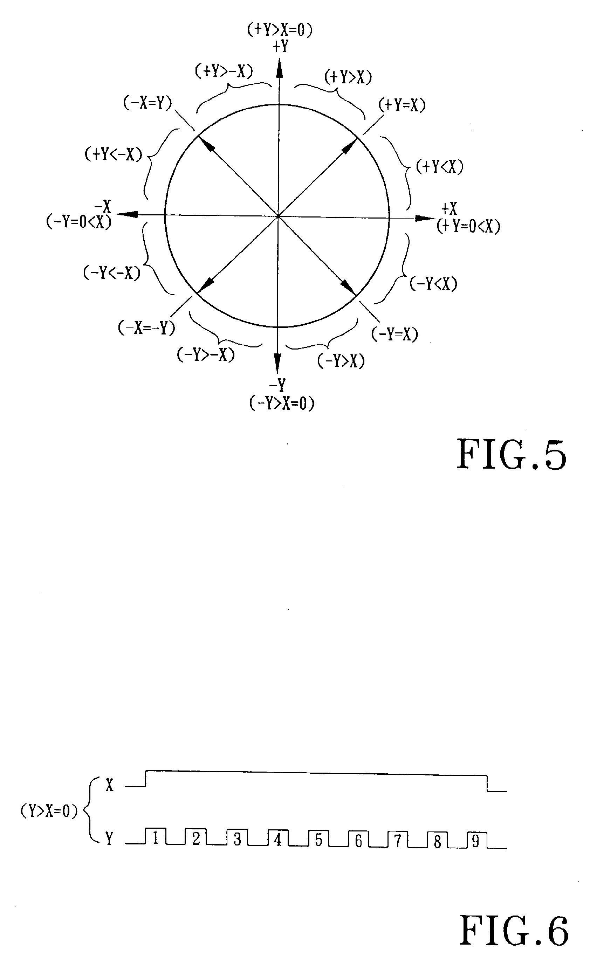

The relationship among drive signals from the first and second encoding assemblies 2, 2' and the direction of movement of the ball bearing 15 is shown in Figure 5. The following are three sample conditions to illustrate the operation of the encoding assemblies 2, 2':

1. In the (+Y>X=0) state of Figure 5, movement of the ball bearing 15 only occurs in the +Y-direction. As such, the contact member 20 is stationary, while the contact member 21 rotates in the first direction. Figure 6 shows the X-axis and Y-axis drive signals generated by the first and second encoding assemblies 2, 2' under the (+Y>X=0) state. As shown, with further reference to Figure 6, because the contact member 20 is stationary, the associated rotary member 23 does not rotate, thereby maintaining the front and rear conductor plates 240, 242 at the high logic state due to connection of the latter with the positive (or Vcc) terminal of a power supply unit. On the other hand, because the contact member 21 rotates in the first direction, the associated rotary member 23 rotates such that the contact arms 230 contact successively the front conductor plate 240. Since the rotary member 23 is connected electrically to the ground terminal of a power supply unit, the logic state of the front conductor plate 240 changes from high to low at the instant one of the contact arms 230 makes contact therewith. Thus, due to rotation of the rotary member 23 with the contact member 21 in the first direction, the +Y-axis drive signal from the second encoding assembly 2' is generated in the form of a pulse train having equidistant pulses at this time.

In the example of Figure 6, the +Y-axis drive signal from the second encoding assembly 2' is formed of nine consecutive pulses. The number of pulses in the +Y-axis drive signal from the second encoding assembly 2' depends upon the speed of movement of the ball bearing 15 in the +Y-direction. The faster the movement of the ball bearing 15 in the +Y-direction, the pulses in the +Y-axis drive signal from the second encoding assembly 2' will be narrower, and the number of pulses in the +Y-axis drive signal will be greater.

The speed of rotation of the contact members 20, 21 depends upon the vectorial angle component of the movement of the ball bearing 15 that acts on the corresponding contact member 20, 21. For example, when the vectorial angle components acting on the contact members 20, 21 are equal, the contact members 20, 21 rotate at the same speed. When the vectorial angle component acting on the contact member 20 is greater than that acting on the contact member 21, the contact member 20 rotates at a faster speed as compared to the contact member 21. Accordingly, when the vectorial angle component acting on the contact member 20 is smaller than that acting on the contact member 21, the contact member 20 rotates at a slower speed as compared to the contact member 21.

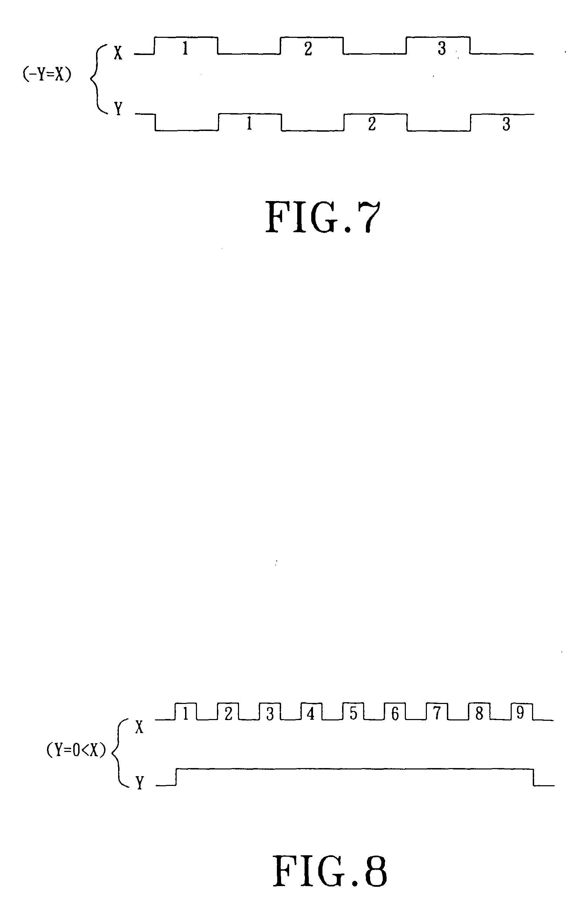

2. In the (-Y=+X) state of Figure 5, movement of the ball bearing 15 occurs in both the -Y-direction and the +X-direction. As such, the contact member 20 rotates in the first direction, whereas the contact member 21 rotates in the second direction. Figure 7 shows the X-axis and Y-axis drive signals generated by the first and second encoding assemblies 2, 2' under the (-Y=+X) state. As shown, both the +X-axis drive signal and the -Y-axis drive signal from the first and second encoding assemblies 2, 2' are in the form of pulse trains. However, because the vectorial angle components of the movement of the ball bearing 15 that act on the contact members 20, 21 are equal, assuming that the ball bearing 15 moves at the same speed as in the example of Figure 6, the contact members 20, 21 rotate at a slower speed as compared to the example of Figure 6, thereby resulting in wider pulses for the +X-axis and the - Y-axis drive signals.

3. In the (+Y=0<X) state of Figure 5, movement of the ball bearing 15 only occurs in the +X-direction. As such, the contact member 21 is stationary, while the contact member 20 rotates in the first direction. Figure 8 shows the X-axis and Y-axis drive signals generated by the first and second encoding assemblies 2, 2' under the (+Y=0<X) state. As shown, the Y-axis drive signal from the second encoding assembly 2' is maintained at the high logic state, whereas the +X-axis drive signal from the first encoding assembly 2 is in the form of a pulse train.

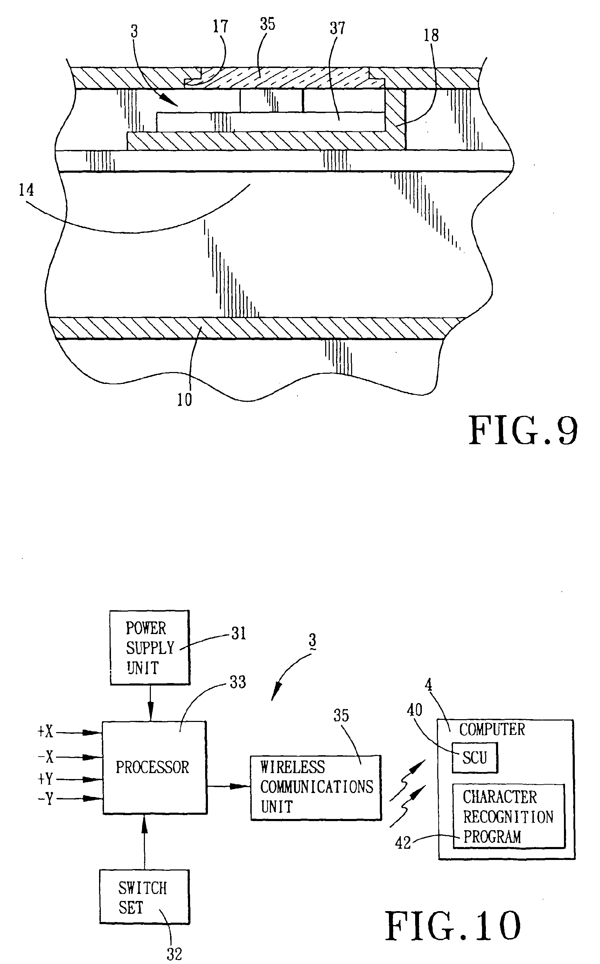

Referring to Figure 9, the pen barrel 10 is further formed with a mounting hole 17. A positioning frame portion 18 projects inwardly and integrally from the pen barrel 10 adjacent to the mounting hole 17. A circuit board 37 is mounted on the positioning frame 18, and has a communications device, such as a wireless communications device 3, provided thereon.

Referring to Figure 10, the wireless communications device 3 is connected electrically to the first and second encoding assemblies 2, 2' to receive the X-axis and Y-axis drive signals therefrom. The wireless communications device 3 is adapted to establish a wireless communications link in a known manner with a computer 4, and comprises a power supply unit 31, a switch set 32, a processor 33, and a wireless communications unit 35, such as a conventional infrared communications unit.

The power supply unit 31 can be in the form of series-connected battery cells (not shown), and provides the electrical energy required for operating the wireless communications device 3.

The processor 33 is connected to the power supply unit 31, the switch set 32 and the wireless communications unit 35. The processor 33 is further connected to the first and second encoding assemblies 2, 2' (see Figure 1) so as to receive the X-axis and Y-axis drive signals therefrom. In the first preferred embodiment, the processor 33 is configured to operate in a cursor control mode, where the processor 33 controls the wireless communications unit 35 to transmit the X-axis and Y-axis drive signals wirelessly for reception by the computer 4 via a corresponding standard communications unit (SCU) 40 thereon. Thus, the X-axis and Y-axis drive signals can be used to control movement of a cursor on a screen (not shown) of the computer 4. The switch set 32 functions in a manner similar to the switches found on a conventional computer mouse. When the switch set 32 is operated, the processor 33 controls the wireless communications unit 35 to transmit corresponding switch signals to the computer 4.

The writing instrument 1 of the first preferred embodiment optionally includes a character recognition program 42 to be executed by the computer 4. The character recognition program 42 involves known character recognition techniques, which vary according to the language of the characters to be identified. As such, when the ball bearing 15 (see Figure 1) is moved to form characters on the writing surface, the character recognition program 42 enables the computer 4 to identify the characters formed on the writing surface via the ball bearing 15 from the X-axis and Y-axis drive signals and to generate computer codes that are assigned to the characters identified thereby. Thus, when the computer 4 executes the character recognition program 42, the writing instrument 1 can serve as a character input device for the computer 4.

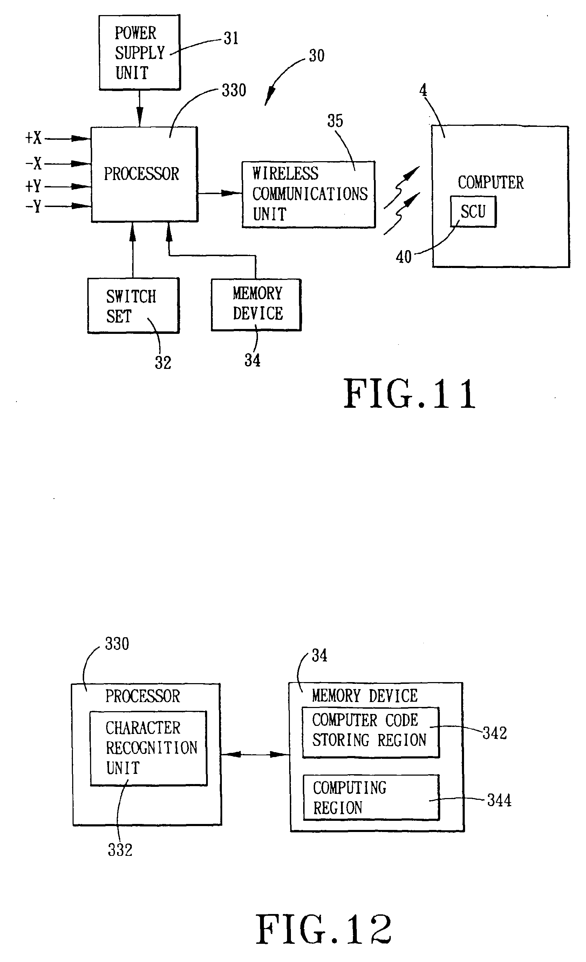

Figure 11 is a schematic circuit block diagram illustrating a wireless communications device 30 of the second preferred embodiment of a writing instrument according to the present invention. Unlike the device 3 shown in Figure 10, the wireless communications device 30 further includes a memory device 34 connected to the processor 330.

Referring to Figures 11 and 12, the memory device 34 is configured to include at least a computer code storing region 342 and a computing region 344. The computer code storing region 342 is used to store character patterns and associated standard computer codes that are assigned to characters to be formed on a writing surface via the ball bearing 15. One example of a standard computer code is ASCII, which is suitable for encoding alphanumeric characters. However, in view of the fact that some languages, such as Chinese and Japanese, do not use ASCII for the encoding of their characters, more than one type of character patterns and standard computer codes may be stored in the region 342 to enable operation of the writing instrument under different language formats. The computing region 344 is used for temporary storage of data, such as when identifying an input character.

In the preferred embodiment, the memory device 34 is implemented using two different kinds of memory units. The first memory unit is a FLASH random access memory having the computer code storing region 342. The second memory unit is a static random access memory (SRAM) having the computing region 344.

Unlike the previous embodiment, the processor 330 of the wireless communications device 30 is configured to include a character recognition unit 332. When the power supply unit 31 is active, the switch set 36 can be operated in a predetermined manner to select the operating mode of the processor 330 and the operating language of the writing instrument. When the select switch 36 is operated to initiate operation of the processor 330 in the cursor control mode, the processor 33 controls the wireless communications unit 35 to transmit the X-axis and Y-axis drive signals wirelessly for reception by the computer 4, thereby permitting control of the movement of a cursor on a screen of the computer 4. When the select switch 36 is operated to initiate operation of the processor 330 in a keyboard mode, the ball bearing 15 can be moved to form characters on a writing surface. At this time, with further reference to Figure 1, the first and second encoding assemblies 2, 2' generate the X-axis and Y-axis drive signals corresponding to the detected movement of the ball bearing 15. In the keyboard mode, the character recognition unit 332 of the processor 330 is activated so as to retrieve the appropriate character patterns and standard computer codes from the computer code storing region 342 of the memory device 34, and so as to store the same in the computing region 344 so that computations and comparisons can be made in order to commence identification of the characters formed on the writing surface, and generation of the computer codes that are assigned to the characters identified thereby. The generated computer codes for the identified characters are stored in the computing region 344. Thereafter, the character recognition unit 332 controls the wireless communications unit 35 to transmit the computer codes wirelessly for reception by the computer 4, thereby enabling the writing instrument to serve as a character input device for the computer 4. As such, unlike the previous embodiment, where character recognition is done at the computer 4 externally of the writing instrument 1, the wireless communications device 30 of this embodiment is capable of performing character recognition internally of the writing instrument.

As to how the character recognition unit 332 identifies the characters that are formed on the writing surface via the ball bearing 15, this can be accomplished using known character recognition techniques, which vary according to the language of the characters to be identified.

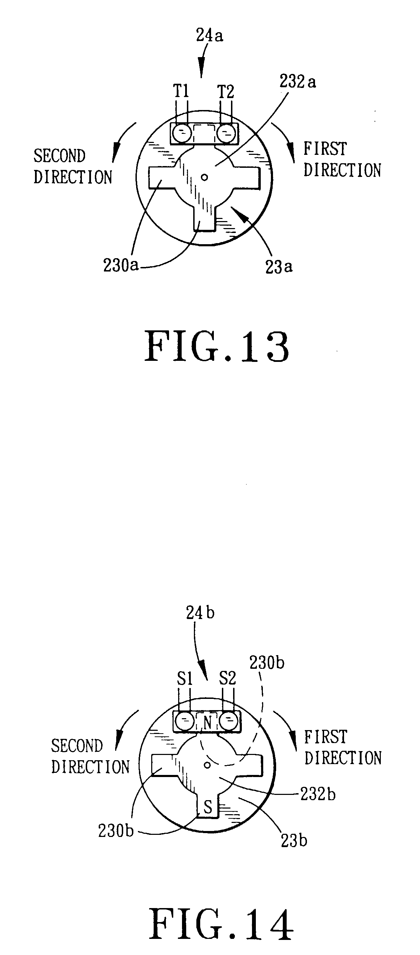

The configuration of the first and second encoding assemblies should not be limited to that described beforehand. Other forms of encoding assemblies can be employed in the writing instrument of this invention, as shown in Figures 13 and 14.

Figure 13 illustrates a rotary member 23a and a sensing unit 24a of an encoding assembly of the third preferred embodiment of a writing instrument according to the present invention. The rotary member 23a is made of plastic, and has a central mounting portion 232a mounted securely on the rotary shaft (not shown), and a plurality of equally spaced shielding arms 230a that extend radially and outwardly from the central mounting portion 232a. The sensing unit 24a includes first and second photo detectors (T1), (T2), such as photo transistors, mounted on the frame member (not shown) in a side-by-side relationship proximate to the rotary member 23a. When the rotary shaft rotates in the first direction, each of the shielding arms 230a shields the first photo detector (T1) first before shielding the second photo detector (T2) . Thus, the drive signal from the first photo detector (T1) changes to a high logic state before that from the second photo detector (T2) . When the rotary shaft rotates in the opposite second direction, each of the shielding arms 230a shields the second photo detector (T2) first before shielding the first photo detector (T1). Thus, the drive signal from the second photo detector (T2) changes to a high logic state before that from the first photo detector (T1). When the rotary shaft does not rotate, the first and second photo detectors (T1), (T2) are not shielded by the shielding arms 230a, and generate a corresponding drive signal that is maintained at the low logic state.

Figure 14 illustrates a rotary member 23b and a sensing unit 24b of an encoding assembly of the fourth preferred embodiment of a writing instrument according to the present invention. The rotary member 23b has a central mounting portion 232b mounted securely on the rotary shaft (not shown), and a plurality of equally spaced arms 230b that extend radially and outwardly from the central mounting portion 232b. Each of the arms 230b has a permanent magnet thereon. Preferably, each of the arms 230b is formed from a permanent magnet material. The sensing unit 24b includes first and second hall effect sensors (S1), (S2) mounted on the frame member (not shown) in a side-by-side relationship proximate to the rotary member 23b. When the rotary shaft rotates in the first direction, each of the arms 230b moves closely adjacent to the first hall effect sensor (S1) first before moving adjacent to the second hall effect sensor (S2). Thus, the drive signal from the first hall effect sensor (S1) changes to a high logic state before that from the second hall effect sensor (S2). When the rotary shaft rotates in the opposite second direction, each of the arms 230b moves closely adjacent to the second hall effect sensor (S2) first before moving adjacent to the first hall effect sensor (S1). Thus, the drive signal from the second hall effect sensor (S2) changes to a high logic state before that from the first hall effect sensor (S1). When the rotary shaft does not rotate, the first and second hall effect sensors (S1), (S2) are not affected by the magnetic properties of the arms 230b, and generate a corresponding drive signal that is maintained at the low logic state.

## Claims

1. A writing instrument (1) adapted for use as a user input device of a computer (4), characterized by:
an elongated pen barrel (10) having a writing end provided with a rotatable ball bearing (15) that serves as a ballpoint writing tip (16), said pen barrel (10) being adapted to be held on one hand for moving said ball bearing (15) on a writing surface;
a first encoding assembly (2), mounted on said writing end of said pen barrel (10), for encoding movement of said ball bearing (15) along an X-direction and for generating X-axis drive signals corresponding to encoded movement of said ball bearing (15) along the X-direction;
a second encoding assembly (2'), mounted on said writing end of said pen barrel (10), for encoding movement of said ball bearing (15) along a Y-direction and for generating Y-axis drive signals corresponding to encoded movement of said ball bearing (15) along the Y-direction; and
a communications device (3, 30) provided on said pen barrel (10) and connected electrically to said first and second encoding assemblies (2, 2') to receive the X-axis and Y-axis drive signals therefrom, said communications device (3, 30) being adapted to establish a communications link with the computer (4) .

2. The writing instrument (1) as claimed in Claim 1, characterized in that said communications device (3, 30) includes a processor (33, 330) connected electrically to said first and second encoding assemblies (2, 2'), and a communications unit (35) connected to said processor (33, 330).

3. The writing instrument (1) as claimed in Claim 2, further characterized in that said processor (33) is configured to operate in a cursor control mode, where said processor (33) controls said communications unit (35) to transmit the X-axis and Y-axis drive signals for reception by the computer (4).

4. The writing instrument (1) as claimed in Claim 3, further characterized in that the X-axis and Y-axis drive signals are adapted to control movement of a cursor on a screen of the computer (4).

5. The writing instrument (1) as claimed in Claim 3, further characterized in that said ball bearing (15) is movable to form characters on the writing surface, said writing instrument (1) further including character recognition program means (42) adapted to be executed by the computer (4) so as to enable the computer (4) to identify the characters formed on the writing surface via said ball bearing (15) from the X-axis and Y-axis drive signals and to generate computer codes that are assigned to the characters identified thereby.

6. The writing instrument (1) as claimed in Claim 2, further characterized in that said ball bearing (15) is movable to form characters on the writing surface, said processor (330) being configured to operate in a keyboard mode, where said processor (330) identifies the characters formed on the writing surface via said ball bearing (15) from the X-axis and Y-axis drive signals, generates computer codes that are assigned to the characters identified thereby, and controls said communications unit (35) to transmit the computer codes for reception by the computer (4).

7. The writing instrument (1) as claimed in any one of Claims 2, 3, 4, 5 and 6, further characterized in that said communications unit (35) is an infrared communications unit.

8. The writing instrument (1) as claimed in any one of the preceding claims, further characterized by ink supplying means (14), disposed in said pen barrel (10), for supplying ink to said ball bearing (15).

9. The writing instrument (1) as claimed in any one of the preceding claims, characterized in that each of said first and second encoding assemblies (2, 2') comprises:
a frame member (22) mounted securely on said writing end of said pen barrel (10);
a rotary shaft (220) mounted rotatably on said frame member (22);
a contact member (20, 21) mounted securely on said rotary shaft (220) and in contact with said ball bearing (15) such that rotation of said ball bearing (15) can drive corresponding rotation of said rotary shaft (220);
a rotary member (23, 23a, 23b) mounted securely on said rotary shaft (220) for co-rotation therewith; and
a sensing unit (24, 24a, 24b) mounted securely on said frame member (22) for generating the drive signals in response to detected movement of said rotary member (23, 23a, 23b).

10. The writing instrument (1) as claimed in Claim 9, further characterized in that:
said rotary member (23) is formed as a conductive member having a central mounting portion (232) mounted securely on said rotary shaft (220), and a plurality of equally spaced contact arms (230) that extend radially and outwardly from said central mounting portion (232), said rotary member (23) being adapted to be connected electrically to a voltage source; and
said sensing unit (24) includes an insulator substrate (241) and front and rear conductor plates (240, 242) mounted respectively on front and rear sides of said insulator substrate (241), said insulator substrate (241) being mounted on said frame member (22) proximate to said rotary member (23) such that rotation of said rotary shaft (220) in a first direction enables said contact arms (230) to contact successively said front conductor plate (240) and such that rotation of said rotary shaft (220) in an opposite second direction enables said contact arms (230) to contact successively said rear conductor plate (242).

11. The writing instrument (1) as claimed in Claim 9, further characterized in that:
said rotary member (23a) has a central mounting portion (232a) mounted securely on said rotary shaft (220), and a plurality of equally spaced shielding arms (230a) that extend radially and outwardly from said central mounting portion (232a); and
said sensing unit (24a) includes first and second photo detectors (T1, T2) mounted on said frame member (22) in a side-by-side relationship proximate to said rotary member (23a) such that rotation of said rotary shaft (220) in a first direction enables each of said shielding arms (230a) to shield said first photo detector (T1) first before shielding said second photo detector (T2), and such that rotation of said rotary shaft (220) in an opposite second direction enables each of said shielding arms (230a) to shield said second photo detector (T2) first before shielding said first photo detector (T1).

12. The writing instrument (1) as claimed in Claim 11, further characterized in that said first and second photo detectors (T1, T2) are photo transistors.

13. The writing instrument (1) as claimed in Claim 9, further characterized in that:
said rotary member (23b) has a central mounting portion (232b) mounted securely on said rotary shaft (220), and a plurality of equally spaced arms (230b) that extend radially and outwardly from said central mounting portion (233b), each of said arms (230b) having a permanent magnet thereon; and
said sensing unit (24b) includes first and second hall effect sensors (S1, S2) mounted on said frame member (22) in a side-by-side relationship proximate to said rotary member (23b) such that rotation of said rotary shaft (220) in a first direction enables each of said arms (230b) to move closely adjacent to said first hall effect sensor (S1) first before moving adjacent to said second hall effect sensor (S2), and such that rotation of said rotary shaft (220) in an opposite second direction enables each of said arms (230b) to move closely adjacent to said second hall effect sensor (S2) first before moving adjacent to said first hall effect sensor (S1).
